# EUROPEAN PATENT SPECIFICATION

(11) **EP 4 270 611 B1**
(45) Date of publication and mention of the grant of the patent: **17.06.2026**
(21) Application number: 21915607.2
(22) Date of filing: 14.12.2021
(51) Int. Cl.: H01M 50/126, H01M 50/145, H01M 50/133, H01M 50/105

(54) **EXTERIOR MATERIAL AND BATTERY USING EXTERIOR MATERIAL**
AUSSENMATERIAL UND BATTERIE MIT DEM AUSSENMATERIAL
MATÉRIAU EXTÉRIEUR ET BATTERIE METTANT EN OEUVRE UN MATÉRIAU EXTÉRIEUR

(30) Priority: 28.12.2020 KR 20200185043
(43) Date of publication of application: 01.11.2023
(73) Proprietor: Libest Inc., Daejeon 34051 (KR)
(72) Inventor: KIM, Joo Seong, Sodam 8-ro Sejong 30147 (KR); LIM, Seung Gyu, Daejeon 34051 (KR); LEE, Gil Ju, Daejeon 34051 (KR); KIM, Jae Hoon, Daejeon 34050 (KR)
(74) Representative: Brann AB
(86) International application number: PCT/KR2021/018921
(87) International publication number: WO 2022/145809

(56) References cited:
- JP-A- 2018 147 860
- KR-A- 20190 016 808
- KR-A- 20190 141 464
- KR-A- 20190 142 043
- KR-B1- 101 840 499
- US-A1- 2017 214 026

## Description

### TECHNICAL FIELD

The present disclosure relates to an exterior material and a battery using the exterior material.

### BACKGROUND

An electrochemical cell refers to an assembly that is composed of at least two electrodes and an electrolyte to provide electrical energy, and in particular, lithium-ion batteries configured as chargeable and dischargeable secondary cells are being widely used for various advanced electronic devices including smart phones.

Recently, various attempts have been made to deviate from conventional shapes in the design of mobile devices, including smartphones, and various wearable devices. Also, attention is increasing on flexible devices which can be bent while maintaining their functions. Accordingly, it is important to secure the function and safety of a flexible electrochemical cell which can be built in such a flexible device and can be used as a power source.

If a flexible battery is repeatedly bent and straightened, an exterior material may be damaged. If the exterior material is severely damaged, the internal electrolyte may leak. Also, even if the exterior material is slightly damaged, moisture in the air may permeate into the battery, which may cause swelling of the battery and damage to the electrode and thus may result in a decrease in capacity and output of the battery.

Therefore, in order to suppress damage to the exterior material of the flexible battery by absorbing the compressive stress and tensile stress generated in a portion where the battery is bent, pattern processing is performed by pressing upper and lower molds on the exterior material. Since the pattern-processed exterior material has a high initial modulus of elasticity (initial elastic modulus), the force acting on the exterior material when the battery is bent is dispersed rather than concentrated on one side. Accordingly, the exterior material and an electrode assembly accommodated therein are not severely bent at any one part.

The pattern of the exterior material does not need to be formed deeply, but needs to minimize damage to the exterior material caused by repetitive bending, flexure, folding, twist, etc. of the battery and improve the durability of the battery.

Since the pattern processing is performed onto the exterior material, it is possible to suppress a break of the exterior material and the electrode assembly accommodated therein and thus possible to minimize damage to the exterior material. However, damage occurs at a pattern edge portion of the exterior material where the sealed portion of the exterior material is adjacent to the pattern-processed portion of the exterior material.

When the battery is deformed, damage rarely occurs at a portion having a large radius of curvature, but damage such as pinholes and cracks occurs at the pattern edge portion of the exterior material having a relatively small radius of curvature.

Therefore, in order to suppress damage at a pattern edge portion of an exterior material, there has been a demand for developing a high-durability exterior material that increases the durability of a flexible battery and is differentiated from a general battery.
(Patent Document 1) Korean Patent Laid-open Publication No. 2005-0052069 (published on June 2, 2005)
(Patent Document 2) Japanese Patent Laid-open Publication No. 2013-218991 (published on October 24, 2013)
(Patent Document 3) Japanese Patent Laid-open Publication No. 2018-147860 (published on September 20, 2018) discloses an exterior material for electrical storage devices comprising a base material layer which consists of a heat-resistant resin film, a sealant layer as an inner side layer, and a metal foil layer arranged between the base material layer and the sealant layer.

### DISCLOSURE OF THE INVENTION

### PROBLEMS TO BE SOLVED BY THE INVENTION

The present invention is to solve the problems of the prior art described above and is as defined in the appended claims. It provides an exterior material including a barrier layer, a first functional layer formed on one surface of the barrier layer, a second functional layer formed on the other surface of the barrier layer, and an anti-corrosion layer formed on at least one surface of the barrier layer. The first functional layer is composed of one or more resin layers including a sealing layer, and the second functional layer has a greater thickness than the barrier layer and has a thickness of 33% or more of the total thickness of the exterior material.

The present disclosure provides a battery including an exterior material, which includes a barrier layer, a first functional layer formed on one surface of the barrier layer, a second functional layer formed on the other surface of the barrier layer, and an anti-corrosion layer formed on at least one surface of the barrier layer, an electrode assembly inserted into the exterior material, and a sealing part sealing the electrode assembly in the exterior material. The first functional layer is composed of one or more resin layers including a sealing layer, and the second functional layer has a greater thickness than the barrier layer and has a thickness of 33% or more of the total thickness of the exterior material.

The present disclosure provides a method of manufacturing a battery using the exterior material in which the first functional layer further includes a reinforced resin layer having a higher melting point than the sealing layer and the reinforced resin layer is formed between the anti-corrosion layer and the sealing layer to suppress the formation of a non-uniform layer at a peripheral portion of the exterior material.

An object of the present disclosure is to provide an exterior material and a battery using the exterior material in which a second functional layer has a greater thickness than a barrier layer to suppress damage occurring at a pattern edge and a peripheral portion of the exterior material and improve durability against deformation of the battery.

The problems to be solved by the present disclosure are not limited to the above-described problems. There may be other problems to be solved by the present disclosure. means for solving the problems

As a means for solving the problems, an embodiment of the present disclosure may provide an exterior material to be used for a battery that includes a barrier layer, a first functional layer formed on one surface of the barrier layer, a second functional layer formed on the other surface of the barrier layer, and an anti-corrosion layer formed on at least one surface of the barrier layer. The first functional layer is composed of one or more resin layers including a sealing layer, and the second functional layer has a greater thickness than the barrier layer and has a thickness of 33% or more of the total thickness of the exterior material.

In an embodiment, the barrier layer may have a thickness of 25 µm or more, and the exterior material may have a total thickness of from 100 µm to 300 µm.

In an embodiment, when the exterior material is folded in order for the second functional layer to be located inside the exterior material, the folded barrier layer may have a radius of curvature of 0.03 mm or more.

In an embodiment, the sealing layer may have a greater thickness than the barrier layer and may have a thickness of 25 µm or more.

According to the invention, the first functional layer includes a reinforced resin layer having a higher melting point than the sealing layer, and the reinforced resin layer has a greater thickness than the anti-corrosion layer and has a thickness of 10 µm or more.

In an embodiment, the reinforced resin layer may have a thickness 0.25 to 4.2 times greater than that of the sealing layer.

In an embodiment, the exterior material may be used for a flexible battery that is bendable.

Another embodiment of the present disclosure may provide a battery using an exterior material that includes an exterior material, which includes a barrier layer, a first functional layer formed on one surface of the barrier layer, a second functional layer formed on the other surface of the barrier layer, and an anti-corrosion layer formed on at least one surface of the barrier layer, an electrode assembly inserted into the exterior material, and a sealing part sealing the electrode assembly in the exterior material. The first functional layer is composed of one or more resin layers including a sealing layer, and the second functional layer has a greater thickness than the barrier layer and has a thickness of 33% or more of the total thickness of the exterior material.

### Effects of the invention

According to any one of the means for solving the problems of the present disclosure described above, the present disclosure provides an exterior material including a barrier layer, a first functional layer formed on one surface of the barrier layer, a second functional layer formed on the other surface of the barrier layer, and an anti-corrosion layer formed on at least one surface of the barrier layer. The first functional layer is composed of one or more resin layers including a sealing layer, and the second functional layer has a greater thickness than the barrier layer and has a thickness of 33% or more of the total thickness of the exterior material.

Further, the second functional layer of the exterior material is set to have a greater thickness than the barrier layer in consideration of the radius of curvature of the barrier layer inside the exterior material. Thus, it is possible to suppress damage at a pattern edge portion of the exterior material where the sealed portion of the exterior material is adjacent to the patterned portion of the exterior material.

Since the first functional layer of the exterior material further includes a reinforced resin layer, the radius of curvature of the barrier layer is increased and the thickness of a non-uniform layer formed at a peripheral portion of the exterior material is reduced. Thus, it is possible to improve the bending durability of a battery.

Furthermore, it is possible to improve the safety and durability of the battery by suppressing damage to the exterior material and a leakage of an electrolyte.

### BRIEF DESCRIPTION OF THE DRAWINGS

**FIG. 1A** is a diagram illustrating a battery including an exterior material according to an embodiment of the present disclosure, **FIG. 1B** is a cross-sectional view of the battery according to an embodiment of the present disclosure.
**FIG. 2A** to **FIG. 2C** illustrate an exterior material formed into a multilayer structure according to an embodiment of the present disclosure.
**FIG. 3A** and **FIG. 3B** are diagrams provided for explaining a process of sealing two sheets of an exterior material according to an embodiment of the present disclosure.
**FIG. 4** compares and evaluates characteristics of a battery and an exterior material having a multilayer structure according to an embodiment of the present disclosure.
**FIG. 5A** and **FIG. 5B** are diagrams provided for explaining the radius of curvature of a barrier layer of an exterior material and a folding test of the exterior material based on the thickness of a second functional layer according to an embodiment of the present disclosure.
**FIG. 6** compares and evaluates the durability of an exterior material having a multilayer structure based on the thickness of a second functional layer through a folding test of the exterior material according to an embodiment of the present disclosure.
**FIG. 7** is a flowchart showing a method of manufacturing a battery using an exterior material according to an embodiment of the present disclosure.

### BEST MODE FOR CARRYING OUT THE INVENTION

Hereafter, embodiments will be described in detail with reference to the accompanying drawings so that the present disclosure may be readily implemented by a person with ordinary skill in the art. However, it is to be noted that the present disclosure is not limited to the embodiments but can be embodied in various other ways. In the drawings, parts irrelevant to the description are omitted for the simplicity of explanation, and like reference numerals denote like parts through the whole document.

Through the whole document, the term "comprises or includes" and/or "comprising or including" used in the document means that one or more other components, steps, operation and/or existence or addition of elements are not excluded in addition to the described components, steps, operation and/or elements unless context dictates otherwise. Further, throughout this document, the term "connected to" may be used to designate a connection or coupling of one element to another element and includes both an element being directly connected to another element, an element being connected to another element via another element, and an element being electronically connected to another element via another element. Furthermore, through the whole document, the term "on" that is used to designate a position of one element with respect to another element includes both a case that the one element is adjacent to the other element and a case that any other element exists between these two elements.

A battery including an exterior material according to the present disclosure may be, for example, an electrochemical cell such as a lithium-ion battery. Specifically, the battery including an exterior material according to the present disclosure may be configured such that an electrode assembly is accommodated and sealed with an electrolyte within the exterior material, and charged and discharged by movement of lithium ions. The battery including an exterior material according to the present disclosure may be a flexible battery configured to be bent with flexibility while maintaining its function. Hereinafter, embodiments of the present disclosure will be described in detail with reference to the accompanying drawings.

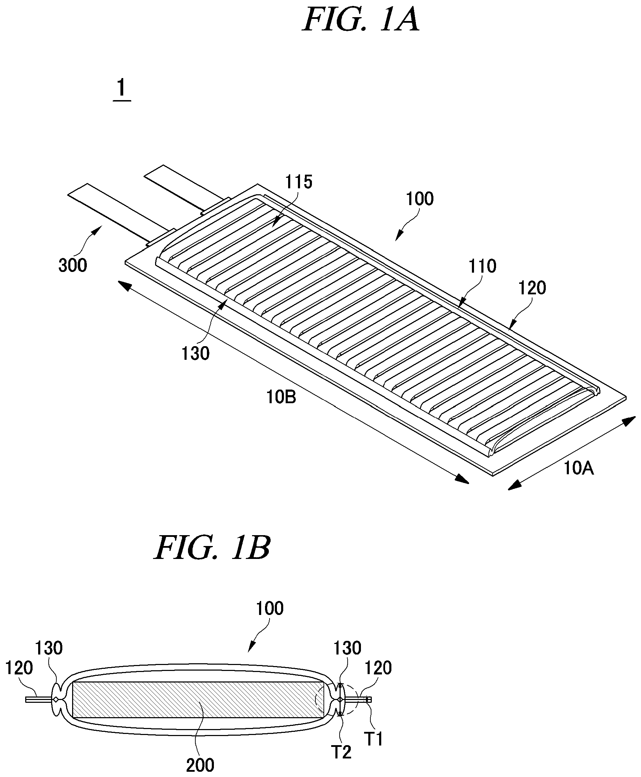

**FIG. 1A** is a perspective view illustrating a battery including an exterior material 100 according to an embodiment of the present disclosure, and **FIG. 1B** is a cross-sectional view of the battery shown in **FIG. 1A****.**

Referring to **FIG. 1A** and **FIG. 1B****,** a battery 10 may include the exterior material 100, an electrode assembly 200 accommodated within the exterior material 100 and an electrode lead 300 connected to the electrode assembly 200.

The exterior material 100 may be formed into, for example, a multilayer structure in which a plurality of functional materials is laminated. Each of the plurality of functional materials may have ductility.

For example, the multilayer structure of the exterior material 100 may include a first functional layer, a barrier layer, a second functional layer and an anti-corrosion layer, which are classified depending on the function of each layer.

The first functional layer is composed of one or more resin layers including a sealing layer, and the sealing layer is made of a material that melts at the lowest temperature among the plurality of functional materials of the exterior material 100 and functions to seal the electrode assembly 200 therein through thermal bonding and suppress a leakage of an electrolyte to the outside. The sealing layer may be formed of, for example, a polypropylene (PP) film.

The barrier layer is a crystalline metal layer for fundamentally blocking movement of materials from an amorphous region of the sealing layer, which is formed of a polymer film, and may be formed of, for example, aluminum foil.

The second functional layer functions to suppress contamination and damage to the metal layer constituting the barrier layer, and may be formed of, for example, a nylon film or a nylon and polyethylene terephthalate (PET) composite layer.

The anti-corrosion layer may serve to suppress a reaction of an electrolyte in the exterior material 100 with the barrier layer.

The exterior material 100 is manufactured by a roll-to-roll process, and mechanical properties of the exterior material 100 may be different between an axial direction and a longitudinal direction of the roll. Herein, a transverse direction (TD) may refer to the axial direction of the roll, and a machine direction (MD) may refer to the longitudinal direction of the roll.

The exterior material 100 may be used for a flexible battery 1 that is bendable.

Due to the exterior material 100 used for the flexible battery 1, mechanical properties of the battery may vary depending on a direction in which a pattern is formed. That is, a battery including an exterior material with a pattern formed in the TD of the exterior material may be different in mechanical properties from a battery including an exterior material with a pattern formed in the MD of the exterior material. Accordingly, the direction in which the pattern is formed may affect the durability of the flexible battery 1.

The electrode assembly 200 includes a plurality of electrodes and may further include a separator, and may have a structure in which they are stacked in a thickness direction.

The electrode assembly 200 may include first and second electrodes having different polarities, and a mixture including an active material may be coated on both surfaces or one surface of each of the first and second electrodes. A separator may be interposed between the first electrode and the second electrode. For example, in the first electrode used as a negative electrode, a current collector is made of copper, aluminum, etc., and an anode material which is one or a combination of graphite, carbon, lithium, silicon, silicon derivatives, such as SiOₓ, silicon-graphite composite, tin and silicon-tin composite. Also, in the second electrode used as a positive electrode, a current collector is made of aluminum, stainless steel, etc., and a cathode material which is one or a combination of lithium cobalt oxide, lithium nickel oxide, lithium manganese oxide, lithium cobalt-manganese oxide, lithium cobalt-nickel oxide, lithium manganese-nickel oxide, lithium cobalt-nickel-manganese oxide, lithium cobalt-nickel-aluminum oxide and lithium iron phosphate. The electrode assembly 200 has a shape having a small thickness in the thickness direction in which the active materials and the separator are stacked, and the active materials extend longer in a longitudinal direction than in a width direction among two directions in which the first and second electrodes extend to form a surface and intersect with (for example, orthogonal to) the directions in which the surface is formed.

Further, the electrode assembly 200 may include electrode connection tabs and lead connection tabs. The electrode connection tabs may be formed to protrude from one ends of the first and second electrodes in the longitudinal direction, and electrode connection tabs protruding from electrodes having the same polarity may be coupled to each other. The electrodes may be electrically connected in parallel by the electrode connection tabs. The lead connection tabs are connected to the electrode lead 300, and may protrude from the electrodes of the positive electrode and the negative electrode so as to be coupled to the electrode lead 300.

Specifically, the exterior material 100 may include an accommodating part 110 and a sealing part 120. The accommodating part 110 may form a space for accommodating the electrode assembly 200, and the sealing part 120 may be bonded to seal the accommodated electrode assembly 200 from the outside. As shown in **FIG. 1B****,** the accommodating part 110 may correspond to an area of the two exterior materials 100 that face each other while being spaced apart from each other. In order to form the accommodating part 110, the exterior material 100 may be processed to be pressed and protruded in the thickness direction so that a predetermined area of the exterior material 100 has a substantially rectangular bowl (or cup) shape.

More specifically, at least one pattern part 115 extending in the TD of the exterior material 100 may be formed on the surface of the accommodating part 110 of the present embodiment. For example, if a battery is manufactured to include the exterior material 100 with the pattern part 115 formed thereon, a width direction 10A of the battery may be the TD of the exterior material 100 and a longitudinal direction 10B of the battery may be the MD of the exterior material 100.

The pattern part 115 extends in one direction and is repeatedly disposed in a direction intersecting with the one direction. Specifically, the pattern part 115 is protruded and recessed alternately in the thickness direction (*i.e*., protruded alternately in opposite directions) so as to have a concavo-convex shape along the one direction. For example, the pattern part 115 may be formed such that a concavo-convex shape having a constant pattern height h1 and a constant pattern pitch P is repeated. Herein, the one direction may be the width direction 10A of the battery, which is the TD of the exterior material 100, and the direction in which the pattern part 115 is repeated may be the longitudinal direction 10B of the battery. Due to the protruded and recessed pattern part 115, the exterior material 100 forming the accommodating part 110 may have a wavy or pleated pattern in the longitudinal direction as shown in **FIG. 1B****.**

Alternatively, the pattern part 115 extending in the MD, which is different from the TD, of the exterior material 100 may be formed. For example, if a battery is manufactured to include the exterior material 100 with the pattern part 115 formed thereon, the width direction 10A of the battery may be the MD of the exterior material and the longitudinal direction 10B of the battery may be the TD of the exterior material.

The sealing part 120 may be formed by bonding two sealing layers (sealing surfaces). The sealing layers (sealing surfaces) refer to thermal bonding surfaces of the exterior material 100, and the two sealing layers (sealing surfaces) overlapping along the edges of the accommodating part 110 are bonded to each other so that an inner space (the accommodating part 110) can be isolated from the outside. The electrode assembly 200 and the electrolyte described above may be accommodated in the inner space, and the electrode assembly 200 and the electrolyte may be kept in a sealed state.

Further, the sealing part 120 may have a flat plate shape extending in the width direction 10A of the battery or the longitudinal direction 10B of the battery. For example, the flat plate shape of the sealing part 120 may be unbent so that its surfaces do not face each other. Alternatively, the sealing part 120 may have a different pattern from the pattern part 115. For example, the sealing part 120 may have a pattern having a lower height in the thickness direction than the pattern part 115.

Meanwhile, the electrode lead 300 is connected to the lead connection tabs of the electrode assembly 200 inside the exterior material 100 and extended to be exposed to the outside of the exterior material 100. The electrode lead 300 functions as a terminal for electrical connection with the electrode assembly 200 accommodated within the exterior material 100, and when the sealing part 120 is formed, the electrode lead 300 may be bonded as being interposed between the sealing layers (sealing surfaces) so as to penetrate the sealing part 120. A pair of electrode leads 300 of the positive electrode and the negative electrode may be coupled to the respective lead connection tabs having the same polarity and provided in the electrode assembly 200.

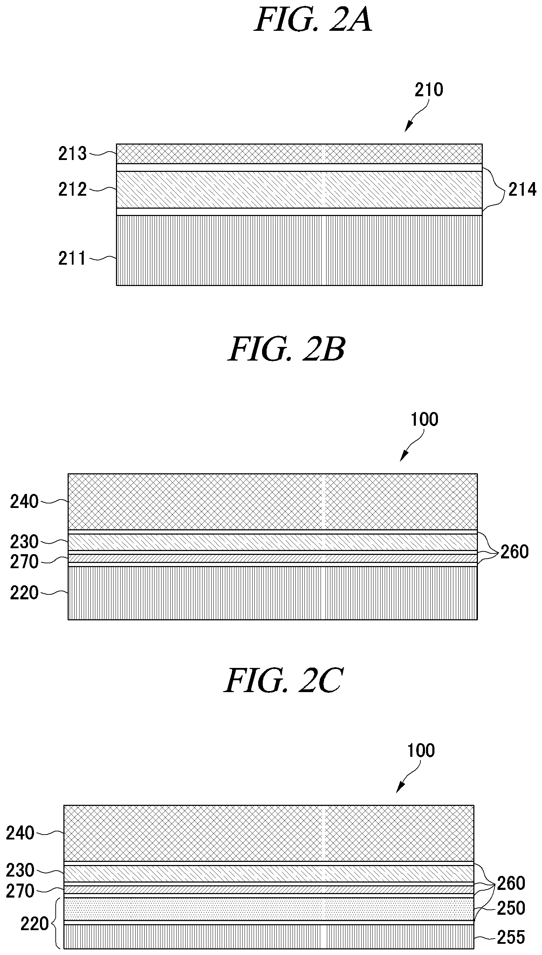

**FIG. 2A** to **FIG. 2C** illustrate an exterior material formed into a multilayer structure according to an embodiment of the present disclosure.

**FIG. 2A** is a diagram illustrating a conventional exterior material having a multilayer structure. A conventional exterior material 210 includes a sealing layer 211, a barrier layer 212 and a protection layer 213. Herein, the exterior material 210 may further include an adhesive layer 214 between layers, and the adhesive layer 214 may be located between layers in order for the layers of the exterior material 210 to adhere to each other and be laminated on each other. Referring to **FIG. 2A****,** the thickness of the sealing layer 211 and the barrier layer 212 of the conventional exterior material 210 accounts for a high ratio of the total thickness of the exterior material 210.

Specifically, the sealing layer 211 of the conventional exterior material 210 is formed to have a thickness accounting for from about 35% to about 53% of the total thickness of the exterior material 210. The conventional sealing layer 211 helps the metal layer constituting the barrier layer 212 to stretch while being stretched in a cup forming process and has the greatest thickness in the total thickness of the conventional exterior material 210 to suppress exposure of the metal layer to the electrolyte. In particular, when a general lithium battery is manufactured in a large size like a battery for electric vehicle, the conventional sealing layer 211 is formed to have a thickness about two times greater than that of the sealing layer 211of a small-sized battery.

As for a flexible battery manufactured using the conventional exterior material 210, when sealing is performed by applying heat to the sealing layer 211, the thickness of the sealed portion is sharply reduced (at most by more than half). Therefore, the bending durability at the pattern edge portion, which is adjacent to the sealed portion of the flexible battery and has a small radius of curvature, is degraded.

The conventional barrier layer 212 is formed to have a thickness accounting for from about 25% to about 40% of the total thickness of the exterior material 210. The conventional barrier layer 212 is formed of metal foil to completely block movement of materials, but the metal foil has lower ductility than other constituent materials. In order to improve moisture barrier properties and formability of the conventional barrier layer 212, the barrier layer 212 is formed to maintain a predetermined thickness of the barrier layer 212 so that the metal layer is not torn or pinholes are not formed even when the barrier layer 212 is stretched in the cup forming process.

The conventional protection layer 213 is formed to have a thickness accounting for from about 15% to about 25% of the total thickness of the conventional exterior material 210. The conventional protection layer 213 functions to protect the barrier layer 212 and is formed to have a smaller thickness than the other layers in the total thickness of the conventional exterior material 210 in order not to reduce the energy density of the flexible battery.

**FIG. 2B** is a diagram illustrating an exterior material having a multilayer structure of a first functional layer including a sealing layer, a barrier layer, a second functional layer and an anti-corrosion layer according to an embodiment of the present disclosure. Referring to FIG. 2B, the exterior material 100 may include a first functional layer 220, an anti-corrosion layer 270, a barrier layer 230 and a second functional layer 240. Herein, the exterior material 100 may further include an adhesive layer 260 between layers, and the adhesive layer 260 may be located between layers in order for the layers of the exterior material 100 to adhere to each other and be laminated on each other.

The total thickness of the exterior material 100 may be from 100 µm to 300 µm.

The first functional layer 220 may be formed on one surface of the barrier layer 230 and may include one or more resin layers including a sealing layer. The sealing layer may be formed to have a thickness accounting for, for example, from about 30% to about 60% of the total thickness of the exterior material 100. For example, the sealing layer may have a greater thickness than the barrier layer 230 and may have a thickness of, for example, 25 µm or more. The sealing layer may function to protect the barrier layer 230. Further, in order to improve the bending durability of the exterior material 100, the sealing layer may have a great thickness, which allows the barrier layer 230 to be bent at an increased radius of curvature when the exterior material 100 is bent.

The anti-corrosion layer 270 may be stacked on the first functional layer 220. The anti-corrosion layer 270 may serve to suppress a reaction of the electrolyte in the exterior material 100 with the barrier layer 230 and may be formed with the adhesive layer 260 to a thickness of from about 3 µm to about 6 µm.

The barrier layer 230 is stacked on the anti-corrosion layer 270 and may be formed to have a thickness accounting for, for example, from about 8% to about 30% of the total thickness of the exterior material 100. For example, the barrier layer 230 may have a thickness of 25 µm or more.

In the conventional exterior material 210 shown in **FIG. 2A****,** the barrier layer 212 has the lowest durability to repeated bending. Thus, as the thickness of the conventional barrier layer 212 increases, the durability is degraded, and as the thickness of the conventional barrier layer 212 decreases, the patternability on the surface of the exterior material 210 is degraded. Therefore, the conventional barrier layer 212 is required to have an appropriate thickness.

However, according to the present disclosure, the second functional layer 240 has a higher thickness ratio than the barrier layer 230, and, thus, it is possible to improve the durability to repeated bending, which is one of flexibility evaluation indexes, of the flexible battery 1.

In the flexible battery 1, the barrier layer 230 is formed to a depth of at most 2 mm, which means that the barrier layer 230 is not formed as deeply as in a conventional battery. Therefore, the barrier layer 230 may be formed to have a smaller thickness than the other layers as long as it can properly perform a barrier function.

The second functional layer 240 may be formed on the other surface of the barrier layer 230 and may be formed to have a thickness accounting for, for example, from about 22% to about 50% of the total thickness of the exterior material 100. For example, the second functional layer 240 may have a greater thickness than the barrier layer 230 and may have a thickness accounting for 33% or more of the total thickness of the exterior material 100.

The second functional layer 240 may function to protect the barrier layer 230 from an external environment.

To improve the bending durability of the exterior material 100, the second functional layer 240 may have the greatest thickness, which allows the barrier layer 230 to be bent at an increased radius of curvature when the exterior material 100 is bent.

The flexible battery 1 is frequently damaged at the pattern part 115 of the exterior material 100 having a smallest radius of curvature R and a pattern edge adjacent to the sealing part 120. In this case, the pattern edge adjacent to the sealing part 120 of the battery has a very small radius of curvature and the bending durability of the flexible battery 1 can be easily known through repeated folding tests of the exterior material 100. In the folded (folding) state, the radius of curvature is the smallest, and repeated folding is performed toward the second functional layer 240 of the exterior material 100 where the flexible battery 1 is bent. In other words, during folding, the folded inside of the exterior material 100 may serve as a protection layer, *i.e*., the second functional layer 240 and the outside may serve as a sealing layer, *i.e.*, the first functional layer 220. Herein, when the exterior material 100 is folded so that the second functional layer 240 is located inside the exterior material 100, the folded barrier layer 230 may have a radius of curvature of 0.03 mm or more.

That is, according to the present disclosure, the second functional layer 240 is formed to have the greatest thickness in the total thickness of the exterior material 100, and, thus, it is possible to suppress damage to the pattern part 115 on the exterior material 100 of the flexible battery 1 and the pattern edge adjacent to the sealing part 120.

**FIG. 2C** is a diagram illustrating an exterior material having a multilayer structure of a first functional layer including a sealing layer and a reinforced resin layer, a barrier layer, a second functional layer and an anti-corrosion layer according to an embodiment of the present disclosure. Referring to **FIG. 2C****,** the exterior material 100 may include the first functional layer 220, the anti-corrosion layer 270, the barrier layer 230 and the second functional layer 240. Herein, the exterior material 100 may further include the adhesive layer 260 located between layers.

The anti-corrosion layer 270 may serve to suppress a reaction of the electrolyte in the exterior material 100 with the barrier layer 230 and may be formed with the adhesive layer 260 to a thickness of from about 3 µm to about 6 µm.

The first functional layer 220 may be composed of one or more resin layers including a sealing layer 255 and may further include a reinforced resin layer 250 having a higher melting point than the sealing layer 255. For example, the reinforced resin layer 250 may be stacked on the sealing layer 255 between the sealing layer 255 and the barrier layer 230 and the reinforced resin layer 250 may have a greater thickness than the anti-corrosion layer 270. For example, the reinforced resin layer 250 may have a thickness of about 10 µm or more in the total thickness of the exterior material 100 and may have a thickness 0.25 to 4.2 times greater than that of the sealing layer 255. Herein, the reinforced resin layer 250 may serve to suppress a sharp decrease in thickness of the sealing part 120 during sealing and protect the barrier layer 230 which is damaged first by repeated deformation.

The reinforced resin layer 250 is a polymer layer having a higher melting point than the sealing layer 255 and may be formed of, for example, polyamide. Since the reinforced resin layer 250 is a polymer layer having a higher melting point than the sealing layer 255, it is possible to suppress melting of the sealing layer 255 by a predetermined thickness or more due to the sealing temperature when the exterior material 100 is thermally bonded and also possible to lengthen a movement path of the electrolyte to barrier layer 230 and thus delay a reaction between the electrolyte and the barrier layer 230 as late as possible. Therefore, the reinforced resin layer 250 may protect the barrier layer 230 and may also have flexibility.

In the flexible battery 1 including the reinforced resin layer 250, as the sealing part 120 increases in thickness, the radius of curvature increases when the flexible battery 1 is bent. Therefore, the bending durability of the flexible battery 1 can be improved.

That is, according to the present disclosure, the first functional layer 220 of the exterior material 100 further includes the reinforced resin layer 250, which is a polymer layer, and, thus, it is possible to improve the durability to repeated bending, which is one of flexibility evaluation indexes, of the flexible battery in the sealing part 120 of the exterior material 100 as well as on the outside of the exterior material 100.

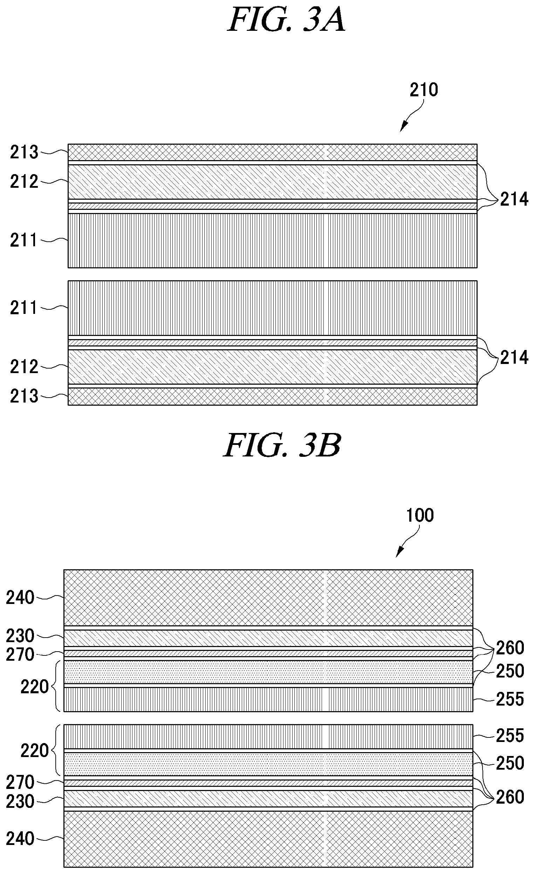

**FIG. 3A** and **FIG. 3B** are diagrams provided for explaining a process of sealing two sheets of an exterior material according to an embodiment of the present disclosure.

**FIG. 3A** is a diagram illustrating a conventional process of sealing an exterior material using a sealing layer. Referring to **FIG. 3A****,** in the conventional case of sealing two sheets of the exterior material 210, two sealing layers 211 each having a thickness of about 80 µm are joined to have a thickness of about 160 µm and sealed to a thickness of about 80 µm which corresponds to 50% of the combined thickness of the two joined sealing layers 211.

**FIG. 3B** is a diagram illustrating a process of sealing an exterior material using a first functional layer including a sealing layer and a reinforced resin layer according to an embodiment of the present disclosure. Referring to **FIG. 3B****,** the first functional layer 220 may include the sealing layer 255 and the reinforced resin layer 250. Herein, the reinforced resin layer 250 may have a greater thickness than the anti-corrosion layer 270 and may be formed to have a thickness of about 10 µm or more.

For example, when two sheets of the exterior material 100 including the first functional layer 220 composed of the sealing layer 255 and the reinforced resin layer 250 are sealed, the reinforced resin layer 250 and the sealing layer 255 may have a thickness ratio (reinforced resin layer/ sealing layer) of from 0.25 reinforced resin layer=10 µm, sealing layer=40 µm, barrier layer=25 µm, second functional layer (protection layer)=50 µm) to 4.2 (reinforced resin layer=105µm, sealing layer=25 µm, barrier layer=25 µm, second functional layer (protection layer)=80 µm).

If the thickness ratio of the reinforced resin layer 250/the sealing layer 255 is less than 0.25, it is difficult to suppress the formation of a non-uniform layer at a peripheral portion 130 of the battery and protect the barrier layer 230 which is damaged by a hard non-uniform layer when the battery is repeatedly deformed. If the thickness ratio of the reinforced resin layer 250/the sealing layer 255 is more than 4.2, a ratio of the barrier layer 230 and the second functional layer 240 relatively decreases, and, thus, the formability and durability are degraded and the total thickness of the exterior material 100 increases. Therefore, the energy density of the battery may decrease. Accordingly, the thickness ratio of the reinforced resin layer 250/the sealing layer 255 may be desirably set to from 0.25 to 4.2.

The first functional layer 220 may be composed of one or more resin layers including the sealing layer 255, and the sealing layer 255 may have a greater thickness than the barrier layer 230 and may have a thickness of about 25 µm or more. This is because an exterior material of a general battery is formed for the purpose of sealability and formability, whereas the exterior material 100 of the flexible battery 1 according to the present disclosure is formed for the main purpose of sealability. To this end, when the flexible battery 1 is subjected to a sealing process, the sealing layer 255 may be formed to have a thickness of about 25 µm or more to secure sealability in consideration of left and right process deviations.

The optimal thickness ratio between the reinforced resin layer 250 and the sealing layer 255 may be about 6:4.

When the reinforced resin layer 250 and the sealing layer 255 are formed at the optimal thickness ratio, the sealing layer 255 may have sealability and the reinforced resin layer 250 can protect the barrier layer 230 and contribute to formability. Therefore, it is possible to suppress the formation of a non-uniform layer at the peripheral portion 130 during a sealing process of the exterior material.

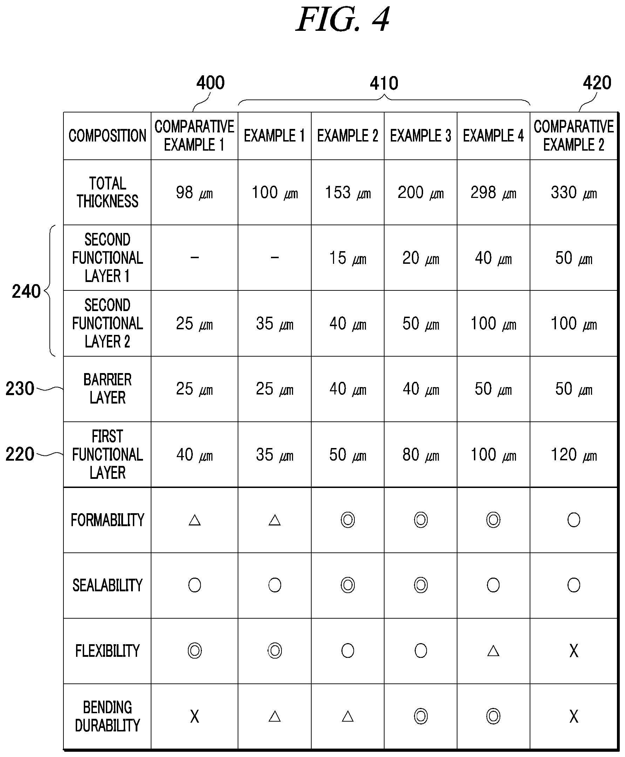

Hereafter, a method of evaluating the characteristics of the exterior material 100 having a multilayer structure will be described with reference to **FIG. 4** to **FIG. 6****.** Herein, the exterior material 100 may be composed of the first functional layer 220, the barrier layer 230 and the second functional layer 240. The barrier layer 230 may be located between the first functional layer 220 and the second functional layer 240 and may be formed to have a thickness of, for example, 25 µm or more.

According to an embodiment, patterning may be performed with a mold in order to check the workability of each material constituting the multilayered exterior material 100.

As a result, it can be seen that the sealing layer, which is the first functional layer 220, has poor patternability but has excellent stretchability and thus it helps the barrier layer 230 stretch as much as possible by depth when the exterior material 100 is formed.

It can be seen that the barrier layer 230 has good patternability.

It can be seen that the second functional layer 240 has normal patternability.

In the above evaluation, the barrier layer 230 has the greatest influence on the patternability, i.e., formability, of the exterior material 100. The barrier layer 230 formed of aluminum foil needs to have a thickness of at least 25 µm or more to maintain the shape of a pattern on the exterior material 100. However, when the thickness of the barrier layer 230 is less than 25 µm, the ratio of other structural layers is high, and, thus, the formability may be degraded.

**FIG. 4** compares and evaluates characteristics of a battery using an exterior material and the exterior material having a multilayer structure according to an embodiment of the present disclosure. Referring to **FIG.** 4, the exterior material 100 may be composed of the first functional layer 220, the barrier layer 230 and the second functional layer 240. For example, the total thickness of the exterior material 100 may be from 100 µm to 300 µm and the thickness of the barrier layer 230 may be 25 µm or more.

A basic evaluation of the exterior material 100 is performed in terms of formability, sealability, flexibility, bending durability and the like. The formability indicates the degree of formation of the wavy pattern of the exterior material 100, the sealability indicates the degree of sealing during thermal fusion, the flexibility indicates the degree of flexibility of the flexible battery 1 using this exterior material 100, and the bending durability indicates the degree of damage of the exterior material 100 during repeated bending tests of the flexible battery 1.

As a result of the test, it can be seen that when the total thickness of the exterior material 100 is less than 100 µm (400), the pattern formability is not good and during the repeated bending tests, a lot of damage such as pinholes and cracks occurred in the exterior material 100. Also, it can be seen that when the total thickness of the exterior material 100 exceeds 300 µm (420), the flexibility of the exterior material 100 is very low and the exterior material 100 is broken, and, thus, the electrodes inside are also bent and cut, which causes poor bending durability. Further, as the total thickness of the exterior material 100 increased, the energy density of the flexible battery 1 decreased.

That is, as a result of the test, the optimal total thickness of the exterior material 100 may be from 100 µm to 300 µm (410).

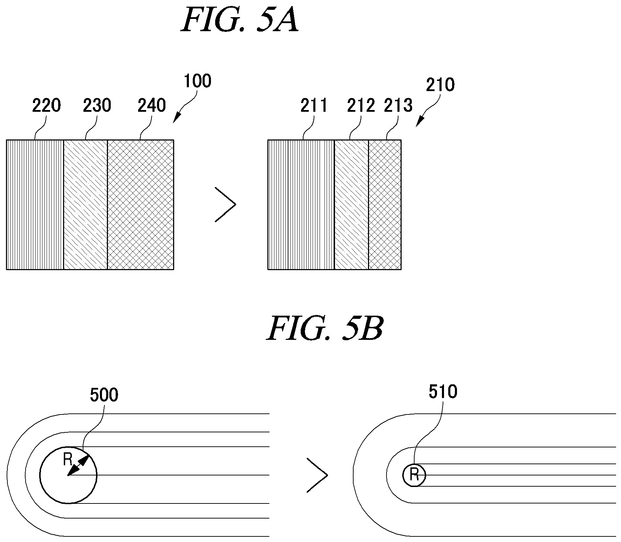

**FIG. 5A** and **FIG. 5B** are diagrams provided for explaining the radius of curvature of a barrier layer of an exterior material and a folding test of the exterior material based on the thickness of a second functional layer according to an embodiment of the present disclosure.

Referring to **FIG. 5A****,** the conventional exterior material 210 is composed of the sealing layer 211, the barrier layer 212 and the protection layer 213, and the multilayer structure of the conventional exterior material 210 is configured such that the sum of thicknesses of the barrier layer 212 and the protection layer 213 is smaller than the thickness of the sealing layer 211.

However, the exterior material 100 proposed in the present disclosure is composed of the first functional layer 220, the barrier layer 230 and the second functional layer 240, and the multilayer structure of the exterior material 100 of the present disclosure may be configured such that the thickness of the first functional layer 220 is smaller than the sum of thicknesses of the barrier layer 230 and the second functional layer 240. For example, the total thickness of the exterior material 100 proposed in the present disclosure may be from 100 µm to 300 µm, and the barrier layer 230 may be configured to have a thickness of 25 µm or more.

Referring to **FIG. 5B****,** it can be seen that when the exterior material 100 is folded such that the second functional layer 240 is located inside the exterior material 100, a radius of curvature (R) 500 of the barrier layer 230 in the exterior material 100 proposed in the present disclosure is greater than a radius of curvature (R) 510 of the barrier layer 212 in the conventional exterior material 210. Herein, when the exterior material 100 is folded such that the second functional layer 240 is located inside the exterior material 100, the radius of curvature of the folded barrier layer 230 may be 0.03 mm or more. Referring to **FIG. 5B****,** it can be seen that when the exterior material 100 is folded, the radius of curvature of the barrier layers 230 and 212 is equal to the thickness of the second functional layer 240 of the present disclosure and the conventional protection layer 213. This is because, when the minimum value of the total thickness of the exterior material 100 is 100 µm, the second functional layer 240 is 33% or more of the total thickness of the exterior material 100.

**A** folding test may be performed to the exterior material 100. For example, if the exterior material 100 is punched in the shape of a dumbbell (*e.g*., width: 10 mm, length: 100 mm) and the center of a sample is pressed for a predetermined time (*e.g.,* 2 seconds) under a constant pressure (*e.g.*, gauge pressure: 0.2 MPa), the exterior material 100 may be bent to be folded at the smallest radius of curvature R. In this case, by repeatedly folding and unfolding the exterior material 100 toward the second functional layer 240 in a direction in which the flexible battery 1 is bent, it is possible to check whether the barrier layer 230 of the exterior material 100 is broken.

In general, in the flexible battery 1, the exterior material 100 is damaged at a pattern edge portion which has the smallest radius of curvature R and in which the sealing part 120 is adjacent to the pattern portion 115. Here, the exterior material 100 may be in a folded state and the flexible battery 1 may be bent in an outside direction toward the second functional layer 240.

In this regard, according to the present disclosure, the second functional layer 240 may have a thickness of 33% or more of the total thickness of the exterior material 100 to increase the bending durability by increasing the radius of curvature of the barrier layer 230 in the exterior material 100 being bent.

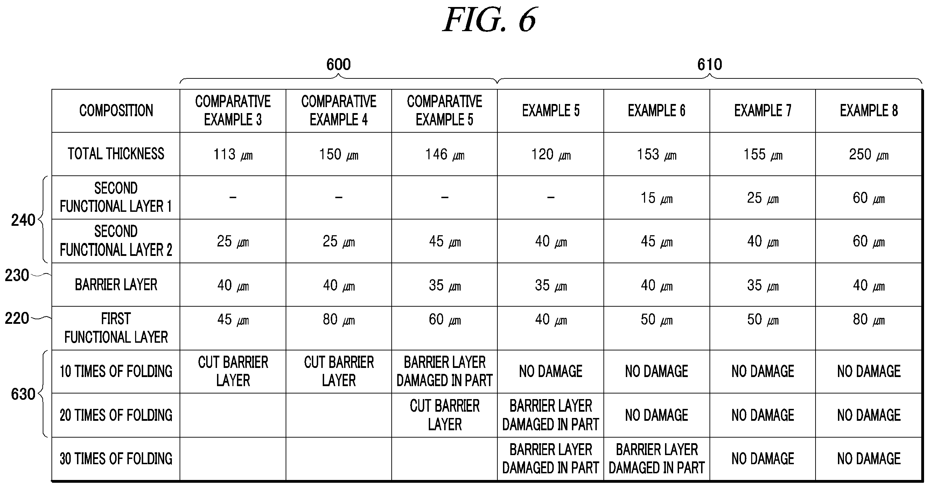

**FIG. 6** compares and evaluates the durability of an exterior material having a multilayer structure based on the thickness of a second functional layer through a folding test of the exterior material according to an embodiment of the present disclosure. Referring to FIG. 6, the effect of durability of the exterior material 100 depending on the thickness of the second functional layer 240 can be seen through the folding test of the exterior material 100.

Hereafter, comparing comparative examples and examples will be compared and described for a case where the exterior material 100 is folded 10 times. Herein, the comparative examples show a case where damage occurs in the barrier layer 230 and the examples show a case where damage does not occur in the barrier layer 230.

Herein, it was confirmed that in the currently commercialized exterior material, the protection layer has a low thickness ratio to the total thickness of the exterior material. Also, it was confirmed that in the commercialized exterior material, the barrier layer is cut after 10 times of repeated folding. Therefore, the present folding test was set up based on 10 times of folding. Further, it can be seen through the test that the exterior material configured to function properly by delaying and suppressing damage to the barrier layer and the flexible battery including the exterior material are excellent in bending durability even after more than 10 times of folding.

According to Comparative Example 3, when the total thickness of the exterior material was "113 µm", the thickness of the second functional layer was "25 µm", the thickness of the barrier layer was "40 µm" and the sealing layer included in the first functional layer was "45 µm", the barrier layer was cut as a result of checking after 10 times of folding. In Comparative Example 3, the thickness of the second functional layer is configured to be smaller than that of the barrier layer and configured to have about 22% of the total thickness of the exterior material, and, thus, the barrier layer is cut just by 10 times of folding.

According to Comparative Example 4, when the total thickness of the exterior material was "150 µm", the thickness of the second functional layer was "25 µm", the thickness of the barrier layer was "40 µm', and the thickness of the first functional layer was "80 µm", the barrier layer was cut as a result of checking after 10 times of folding. In Comparative Example 4, the thickness of the second functional layer is configured to be smaller than that of the barrier layer and configured to have about 16% of the total thickness of the exterior material, and, thus, the barrier layer is cut just by 10 times of folding.

According to Comparative Example 5, when the total thickness of the exterior material was "146 µm", the thickness of the second functional layer was "45 µm", the thickness of the barrier layer was "35 µm" and the thickness of the first functional layer was "60 µm", the barrier layer was damaged in part as a result of checking after 10 times of folding. In Comparative Example 5, the thickness of the second functional layer is configured to be greater than that of the barrier layer and configured to have about 30% of the total thickness of the exterior material, and, thus, the barrier layer is damaged in part after 10 times of folding. In Comparative Example 5 unlike Comparative Examples 3 and 4 where the thickness of the second functional layer is configured to be smaller than that of the barrier layer, the thickness of the second functional layer is configured to be greater than that of the barrier layer. Thus, the barrier layer is not damaged as a whole, but damaged in part when being folded 10 times. Therefore, it can be seen that the bending durability of the exterior material including the barrier layer is improved.

According to Example 5, when the total thickness of the exterior material was "120 µm", the thickness of the second functional layer was "40 µm", the thickness of the barrier layer was "35 µm" and the thickness of the first functional layer was "40 µm", the barrier layer was damaged in part as a result of checking after 20 times of folding. In Example 5, it can be seen that the thickness of the second functional layer is configured to be greater than that of the barrier layer and configured to have about 33% of the total thickness of the exterior material. In Example 5 unlike Comparative Examples 3 to 5 when the barrier layer is damaged in part or as a whole just by 10 times of folding, the thickness of the second functional layer is configured to have about 33% of the total thickness of the exterior material. Thus, the barrier layer is damaged in part when being folded 20 times. Therefore, it can be seen that the bending durability of the exterior material is improved.

According to Example 6, when the total thickness of the exterior material was "153 µm", the thickness of the second functional layer was "60 µm", the thickness of the barrier layer was "40 µm" and the thickness of the first functional layer was "50 µm", the barrier layer was damaged in part as a result of checking after 30 times of folding. In Example 6, it can be seen that the thickness of the second functional layer is configured to be greater than that of the barrier layer and configured to have about 35% of the total thickness of the exterior material.

According to Example 7, when the total thickness of the exterior material was "155 µm", the thickness of the second functional layer was "65 µm", the thickness of the barrier layer was "35 µm" and the thickness of the first functional layer was "50 µm", the barrier layer was not damaged as a result of checking after 30 times of folding. In Example 7 where the barrier layer is not damaged, it can be seen that the thickness of the second functional layer is configured to be greater than that of the barrier layer and configured to have about 41% of the total thickness of the exterior material.

According to Example 8, when the total thickness of the exterior material was "250 µm", the thickness of the second functional layer was "120 µm", the thickness of the barrier layer was "40 µm" and the thickness of the first functional layer was "80 µm", the barrier layer was not damaged as a result of checking after 30 times of folding. In Example 8 where the barrier layer is not damaged, it can be seen that the thickness of the second functional layer is configured to be greater than that of the barrier layer and configured to have 48% of the total thickness of the exterior material. As a result of the test, it can be seen through comparison of Comparative Examples 3 to 5 and Examples 5 to 8 that when the thickness of the second functional layer is greater than that of the barrier layer, the barrier layer is less damaged. Further, it can be seen from Examples 5 to 8 that when the thickness of the second functional layer accounts for about 33% or more of the total thickness of the exterior material and the thickness ratio of the second functional layer to the total thickness of the exterior material increases, damage to the barrier layer depending on the number of foldings decreases.

That is, when the thickness of the second functional layer accounts for less than 33% (600) of the total thickness of the exterior material 100, the pattern formability or sealability is excellent, but the barrier layer is cut by 10 to 20 times of folding (630). However, it can be seen that when the thickness of the second functional layer 240 accounts for 33% or more of the total thickness of the exterior material 100 (610), the barrier layer 230 is improved so as not be cut just by 20 times of folding, and as the thickness ratio of the multilayered second functional layer 240 to the total thickness of the exterior material 100 increases, damage to the exterior material 100 does not occur. As can be seen through the battery bending durability test, the thickness of the second functional layer 240 is configured to have 33% or more of the total thickness of the exterior material 100, and, thus, no damage to the exterior material 100 or leakage of the electrolyte occurred at all after 3,000 times of bending as a result of repeated bending of the battery 1 at R20mm(radius of curvature) and 25 rpm.

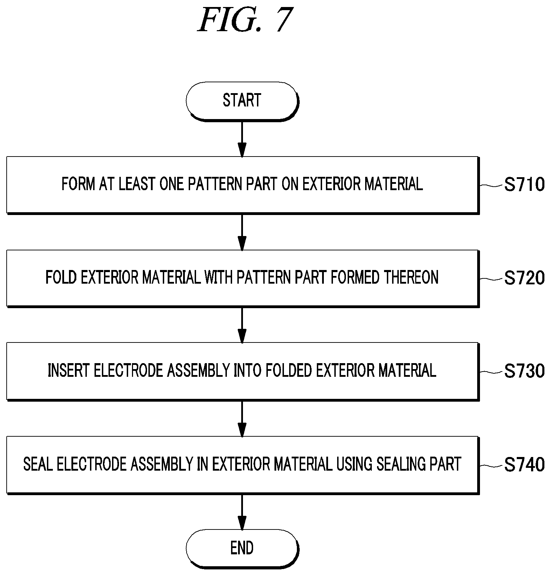

**FIG. 7** is a flowchart showing a method of manufacturing a battery using an exterior material according to an embodiment of the present disclosure.

In a process S710, at least one pattern part 115 may be formed on the exterior material 100. For example, at least one pattern part 115 may be formed on an upper surface and a lower surface of the exterior material 100 composed of the first functional layer 220 including the sealing layer, the barrier layer 230 and the second functional layer 240. For another example, at least one pattern part 115 may be formed on an upper surface and a lower surface of the exterior material 100 composed of the first functional layer 220 including the sealing layer and the reinforced resin layer 250, the barrier layer 230 and the second functional layer 24. Herein, the exterior material 100 may further include the anti-corrosion layer 270.

In a process S720, the exterior material 100 on which the pattern part 115 is formed may be folded. In this case, when the exterior material 100 is folded, a first side portion of the exterior material 100 may be sealed.

In a process S730, the electrode assembly 200 may be inserted into the folded exterior material 100.

In a process S740, the electrode assembly 200 may be sealed in the exterior material 100 through the sealing part 120. In this case, the upper and lower surfaces of the exterior material 100 may be sealed and the electrolyte may be injected into the exterior material 100 and then, a second side portion may be finally sealed through a formation process and a degassing process.

The process S740 may include a process of performing thermal fusion to the sealing part 120, a process of thermally deforming the sealing layer of the exterior material 100 included in the sealing part 120 and a process of forming a non-uniform layer at the peripheral portion 130 of the sealing part 120. In the process of performing thermal fusion, the sealing part 120 is thermally fused in four directions of the exterior material 100 and then, the exterior material 100 is sealed. The thermal fusion may be performed at a temperature of 170°C to 190°C for a predetermined period of time (*e.g.,* 3 seconds).

Although not shown in **FIG. 7****,** the reinforced resin layer 250 may be further included in the first functional layer 220 of the exterior material 100 and may be formed between the anti-corrosion layer 270 and the sealing layer. The reinforced resin layer 250 may have a greater thickness than the anti-corrosion layer 270 and may have a thickness of 10 µm or more. Herein, the reinforced resin layer 250 may be formed of a polymer having a higher melting point than the sealing layer. For example, the reinforced resin layer 250 is a heat-resistant resin layer having a melting point of 200°C or more and may serve to suppress the formation of a non-uniform layer, which has previously occurred, when the battery 1 is sealed. Herein, the non-uniform layer refers to a protrusion of a material (e.g., CPP) of the sealing layer of the exterior material 100 from the peripheral portion 130 between the pattern part 115 and the sealing part 120 while being pushed out in part from the interface of the sealing part 120 due to thermal deformation when the electrode assembly 200 is disposed inside the exterior material 100 and the exterior material 100 is thermally fused.

Since the reinforced resin layer 250 is located between the anti-corrosion layer 270 and the sealing layer, the non-uniform layer of the sealing layer may be formed without changing the thickness of the reinforced resin layer 250 and the formation of the non-uniform layer can be minimized. Further, the reinforced resin layer 250 may serve to protect the barrier layer 230 from being broken by the hard non-uniform layer when the battery is repeatedly deformed.

For example, referring to **FIG. 1B****,** assuming that the thickness of the sealing part 120 is "T1", the thickness of the peripheral portion 130 may be "T2", which is within 300% of "T1", based on the functional layer.

If "T2", which is the thickness of the peripheral portion 130, is in excess of 300% of "T1", which is the thickness of the sealing part 120, during repeated deformation of the flexible battery 1, a difference between "T1" and "T" increases. Thus, damage occurs at the pattern edge portion of the exterior material 100 corresponding to the peripheral portion 130 where the sealing part 120 is adjacent to the pattern portion 115. Accordingly, the non-uniform layer needs to be handled so that "T2", which is the thickness of the peripheral portion 130, is within 300% of "T1", which is the thickness of the sealing part 120. That is, whether or not the edge portion of the exterior material 100 is damaged may be determined depending on whether or not the reinforced resin layer 250 is included.

For example, the total thickness of the conventional exterior material 210 is 113 µm and the sealing layer 211 is formed of cast polypropylene (CPP) with a thickness of 40 µm, and the sealing part of the exterior material 210 was thermally fused at a sealing temperature of 170°C to 190°C. In this case, the conventional exterior material 210 does not include the reinforced resin layer 250, and the thermal fusion was performed to five samples for a sealing time of 3 seconds at a sealing pressure of 1 MPa.

As a result of checking the thickness of the sealing part 120 in micrometers, T1, which is the thickness of the sealing part 120 of the exterior material 210 thermally fused at 170°C to 180°C, was not much changed in the range of 204 µm±2%, but T1, which is the thickness of the sealing part 120 of the exterior material 210 thermally fused at 185°C or more, was in the range of 167 µm±1%, and the thicknesses of the CPP layers on and under an area corresponding to the sealing part 120 were reduced by about 75%. Also, T2, which is the thickness at the peripheral portion 130 adjacent to the sealing part 120, was greatly increased to 633 µm±10%. This is due to the non-uniform layer. Since fusion was performed at a temperature much higher than the melting point of the cast polypropylene (CPP), which is the sealing layer 211, cast polypropylene (CPP) was subjected to severe thermal deformation and pushed out to the side of the sealing part 120 (to the peripheral portion 130 located between the pattern part 115 and the sealing part 120). Due to the non-uniform layer, a wide difference in thickness occurs at the boundary of the sealing part 120. When the flexible battery 1 is continuously bent and deformed, physical stress is accumulated in the barrier layer 212 of the exterior material 210. Thus, the pattern edge portion of the exterior material 210 corresponding to the peripheral portion 130 where the pattern part 115 is adjacent to the sealing part 120 is damaged (e.g., damaged by 3,000 times or less of bending during a bending test at R20mm(radius of curvature) and 25 rpm) and serves as a penetration path for moisture from the outside.

According to the present disclosure, in order to improve this problem, the first functional layer 220 further includes, as the reinforced resin layer 250, a polymer (*e.g*., polyamide), which is one of the heat-resistant resin layers having a melting point of 200°C or more, between the anti-corrosion layer 270 and the sealing layer.

For example, the total thickness of the exterior material 100 is 120 µm, the sealing layer is formed of cast polypropylene (CPP) with a thickness of 30 µm and the reinforced resin layer 250 is formed of polyamide with a thickness of 15 µm, and the exterior material 100 was thermally fused from above and below at a sealing temperature of 170°C to 190°C. In this case, the thermal fusion was performed to five samples for a sealing time of 3 seconds at a sealing pressure of 3 MPa.

As a result of checking the thickness of the sealing part 120 in micrometer, T1, which is the thickness of the sealing part 120 of the exterior material 100 thermally fused at 170°C to 180°C, was in the range of 211µm±2%, but T1, which is the thickness of the sealing part 120 of the exterior material 100 thermally fused at 185°C or more, was in the range of 196µm±2%. A decrease in thickness of cast polypropylene (CPP), which is an area corresponding to the sealing layer, and a sharp decrease in thickness of the sealing part 120 caused by addition of the reinforced resin layer 250 was suppressed. Also, T2, which is the thickness at the peripheral portion 130 adjacent to the sealing part 120, was in the range of 413 µm±10%, and an increase in thickness was suppressed. This is because the reinforced resin layer 250 was added and the ratio of the sealing layer was lowered to reduce the amount of the non-uniform layer pushed out to the side of the sealing part 120 and thus to reduce the thickness.

As a result of repeated bending tests of the flexible battery 1 using the exterior material 100, the reinforced resin layer 250 protects the barrier layer 230 of the exterior material 100 from damage caused by the non-uniform layer. Thus, the bending durability (*e.g*., no damage to the pattern edge of the peripheral portion 130 of the exterior material 100 even after 5,000 times of bending during a bending test at R20mm(radius of curvature) and 25 rpm is significantly improved.

Accordingly, the formation of the non-uniform layer may cause a thickness difference between the sealing part 120 and the peripheral portion 130 where the non-uniform layer is formed. Also, the peripheral portion 130 where the non-uniform layer is formed may be configured to have a thickness within 300% of the thickness of the sealing part 120 based on the reinforced resin layer 250.

In the descriptions above, the processes S710 to S740 may be divided into additional processes or combined into fewer processes depending on an embodiment. In addition, some of the processes may be omitted and the sequence of the processes may be changed if necessary.

The above description of the present disclosure is provided for the purpose of illustration, and it would be understood by a person with ordinary skill in the art that various changes and modifications may be made without changing technical conception and essential features of the present disclosure. Thus, it is clear that the above-described embodiments are illustrative in all aspects and do not limit the present disclosure. For example, each component described to be of a single type can be implemented in a distributed manner. Likewise, components described to be distributed can be implemented in a combined manner.

The scope of the present invention is defined by the following claims rather than by the detailed description of the embodiment.

## Claims

1. An exterior material (100) to be used for a battery (1), comprising:
a barrier layer (230);
a first functional layer (220) formed on one surface of the barrier layer;
a second functional layer (240) formed on the other surface of the barrier layer; and
an anti-corrosion layer (270) formed on at least one surface of the barrier layer,
wherein the first functional layer is composed of one or more resin layers including a sealing layer, and
the second functional layer (240) has a greater thickness than the barrier layer and has a thickness of 33% or more of a total thickness of the exterior material,
wherein the first functional layer further includes a reinforced resin layer having a higher melting point than the sealing layer,
**characterized in that** the reinforced resin layer has a greater thickness than the anti-corrosion layer and has a thickness of 10 µm or more.

2. The exterior material of Claim 1,
wherein the barrier layer has a thickness of 25 µm or more, and
the exterior material has a total thickness of from 100 µm to 300 µm.

3. The exterior material of Claim 1,
wherein when the exterior material is folded in order for the second functional layer to be located inside the exterior material, the folded barrier layer has a radius of curvature (R) of 0.03 mm or more.

4. The exterior material of Claim 1,
wherein the sealing layer has a greater thickness than the barrier layer and has a thickness of 25 µm or more.

5. The exterior material of Claim 1,
wherein the reinforced resin layer has a thickness 0.25 to 4.2 times the thickness of the sealing layer.

6. The exterior material of Claim 1,
wherein the exterior material is used for a flexible battery that is bendable.

7. A battery (1), comprising:
the exterior material (100) of Claim 1,
an electrode assembly (200) inserted into the exterior material; and
a sealing part (120) sealing the electrode assembly in the exterior material,
wherein the first functional layer is composed of one or more resin layers including a sealing layer, and
the second functional layer has a greater thickness than the barrier layer and has a thickness of 33% or more of the total thickness of the exterior material.

8. The battery of Claim 7, further comprising:
a non-uniform layer that is formed at a peripheral portion of the sealing part by performing thermal fusion to the sealing part and thermally deforming a sealing layer included in the sealing part.

9. The battery of Claim 8,
wherein the forming the non-uniform layer causes a thickness difference between the sealing part and the peripheral portion where the non-uniform layer is formed.

10. The battery of Claim 7,
wherein
the reinforced resin layer is formed between the anti-corrosion layer and the sealing layer,.

11. The battery of Claim 8,
wherein the thermal fusion is performed at a temperature of 120°C to 190°C, and
the reinforced resin layer is formed of a polymer having a higher melting point than the sealing layer.

12. The battery of Claim 11,
wherein the peripheral portion where the non-uniform layer is formed is configured to have a thickness within 300% of the thickness of the sealing part based on the reinforced resin layer.

## Patentansprüche

1. Außenmaterial (100) zur Verwendung für eine Batterie (1), umfassend:
eine Sperrschicht (230);
eine erste Funktionsschicht (220), die auf einer Oberfläche der Sperrschicht gebildet ist;
eine zweite Funktionsschicht (240), die auf der anderen Oberfläche der Sperrschicht gebildet ist; und
eine Korrosionsschutzschicht (270), die auf mindestens einer Oberfläche der Sperrschicht gebildet ist,
wobei die erste Funktionsschicht aus einer oder mehreren Harzschichten einschließlich einer Dichtungsschicht gefertigt ist und
die zweite Funktionsschicht (240) eine größere Dicke als die Sperrschicht aufweist und eine Dicke von 33 % oder mehr einer Gesamtdicke des Außenmaterials aufweist,
wobei die erste Funktionsschicht ferner eine verstärkte Harzschicht mit einem höheren Schmelzpunkt als die Dichtungsschicht beinhaltet,
**dadurch gekennzeichnet, dass**
die verstärkte Harzschicht eine größere Dicke als die Korrosionsschutzschicht und eine Dicke von 10 µm oder mehr aufweist.

2. Außenmaterial nach Anspruch 1,
wobei die Sperrschicht eine Dicke von 25 µm oder mehr aufweist und
das Außenmaterial eine Gesamtdicke von 100 µm bis 300 µm aufweist.

3. Außenmaterial nach Anspruch 1,
wobei beim Falten des Außenmaterials, um die zweite Funktionsschicht innerhalb des Außenmaterials zu positionieren, die gefaltete Sperrschicht einen Krümmungsradius (R) von 0,03 mm oder mehr aufweist.

4. Außenmaterial nach Anspruch 1,
wobei die Dichtungsschicht eine größere Dicke als die Sperrschicht aufweist und eine Dicke von 25 µm oder mehr aufweist.

5. Außenmaterial nach Anspruch 1,
wobei die verstärkte Harzschicht eine Dicke aufweist, die das 0,25- bis 4,2-Fache der Dicke der Dichtungsschicht beträgt.

6. Außenmaterial nach Anspruch 1,
wobei das Außenmaterial für eine flexible Batterie verwendet wird, die biegsam ist.

7. Batterie (1), die Folgendes umfasst:
das Außenmaterial (100) nach Anspruch 1,
eine in das Außenmaterial eingeführte Elektrodenanordnung (200); und
ein Dichtungsteil (120), das die Elektrodenanordnung im Außenmaterial abdichtet,
wobei die erste Funktionsschicht aus einer oder mehreren Harzschichten einschließlich einer Dichtungsschicht gefertigt ist und
die zweite Funktionsschicht eine größere Dicke als die Sperrschicht aufweist und eine Dicke von 33 % oder mehr der Gesamtdicke des Außenmaterials aufweist.

8. Batterie nach Anspruch 7, ferner umfassend:
eine ungleichmäßige Schicht, die an einem Randabschnitt des Dichtungsteils durch thermische Verschmelzung mit dem Dichtungsteil und thermische Verformung einer im Dichtungsteil eingeschlossenen Dichtungsschicht gebildet wird.

9. Batterie nach Anspruch 8,
wobei die Bildung der ungleichmäßigen Schicht einen Dickenunterschied zwischen dem Dichtungsteil und dem Randabschnitt, in dem die ungleichmäßige Schicht gebildet wird, verursacht.

10. Batterie nach Anspruch 7,
wobei die verstärkte Harzschicht zwischen der Korrosionsschutzschicht und der Dichtungsschicht gebildet wird.

11. Batterie nach Anspruch 8,
wobei die thermische Verschmelzung bei einer Temperatur von 120 °C bis 190 °C durchgeführt wird und
die verstärkte Harzschicht aus einem Polymer mit einem höheren Schmelzpunkt als die Dichtungsschicht gebildet wird.

12. Batterie nach Anspruch 11,
wobei der Randabschnitt, in dem die ungleichmäßige Schicht gebildet wird, so konfiguriert ist, dass er eine Dicke innerhalb von 300 % der Dicke des Dichtungsteils auf Basis der verstärkten Harzschicht aufweist.

## Revendications

1. Matériau extérieur (100) destiné à être utilisé pour une batterie (1), comprenant :
une couche barrière (230) ;
une première couche fonctionnelle (220) formée sur une surface de la couche barrière ;
une seconde couche fonctionnelle (240) formée sur l'autre surface de la couche barrière ; et
une couche anticorrosion (270) formée sur au moins une surface de la couche barrière,
dans lequel la première couche fonctionnelle est composée d'une ou plusieurs couches de résine, incluant une couche d'étanchéité, et
la seconde couche fonctionnelle (240) présente une épaisseur supérieure à celle de la couche barrière et présente une épaisseur de 33 % ou plus de l'épaisseur totale du matériau extérieur,
dans lequel la première couche fonctionnelle inclut en outre une couche de résine renforcée présentant un point de fusion plus élevé que la couche d'étanchéité,
**caractérisé en ce que**
la couche de résine renforcée présente une épaisseur supérieure à celle de la couche anticorrosion et présente une épaisseur de 10 µm ou plus.

2. Matériau extérieur selon la revendication 1,
dans lequel la couche barrière présente une épaisseur de 25 µm ou plus, et
le matériau extérieur présente une épaisseur totale de 100 µm à 300 µm.

3. Matériau extérieur selon la revendication 1,
dans lequel, lorsque le matériau extérieur est plié afin que la seconde couche fonctionnelle soit située à l'intérieur du matériau extérieur, la couche barrière pliée présente un rayon de courbure (R) de 0,03 mm ou plus.

4. Matériau extérieur selon la revendication 1,
dans lequel la couche d'étanchéité présente une épaisseur supérieure à celle de la couche barrière et présente une épaisseur de 25 µm ou plus.

5. Matériau extérieur selon la revendication 1,
dans lequel la couche de résine renforcée présente une épaisseur de 0,25 à 4,2 fois l'épaisseur de la couche d'étanchéité.

6. Matériau extérieur selon la revendication 1,
dans lequel le matériau extérieur est utilisé pour une batterie flexible qui est pliable.

7. Batterie (1), comprenant :
le matériau extérieur (100) selon la revendication 1,
un ensemble électrode (200) inséré dans le matériau extérieur ; et
une pièce d'étanchéité (120) scellant l'ensemble électrode dans le matériau extérieur,
dans laquelle la première couche fonctionnelle est composée d'une ou plusieurs couches de résine, incluant une couche d'étanchéité, et
la seconde couche fonctionnelle présente une épaisseur supérieure à celle de la couche barrière et présente une épaisseur de 33 % ou plus de l'épaisseur totale du matériau extérieur.

8. Batterie selon la revendication 7, comprenant en outre :
une couche non uniforme qui est formée dans une partie périphérique de la pièce d'étanchéité en effectuant une fusion thermique avec la pièce d'étanchéité et en déformant thermiquement une couche d'étanchéité incluse dans la pièce d'étanchéité.

9. Batterie selon la revendication 8,
dans laquelle la formation de la couche non uniforme provoque une différence d'épaisseur entre la pièce d'étanchéité et la partie périphérique où se forme la couche non uniforme.

10. Batterie selon la revendication 7,
dans laquelle la couche de résine renforcée est formée entre la couche anticorrosion et la couche d'étanchéité.

11. Batterie selon la revendication 8,
dans laquelle la fusion thermique est réalisée à une température de 120 °C à 190 °C, et
la couche de résine renforcée est constituée d'un polymère présentant un point de fusion plus élevé que la couche d'étanchéité.

12. Batterie selon la revendication 11,
dans laquelle la partie périphérique où se forme la couche non uniforme est configurée pour présenter une épaisseur inférieure à 300 % de l'épaisseur de la pièce d'étanchéité sur la base de la couche de résine renforcée.
